(19) Europäisches Patentamt
European Patent Office
Office européen des brevets

(11) EP 4 504 805 B1

(12) EUROPEAN PATENT SPECIFICATION

(45) Date of publication and mention of the grant of the patent:
**11.03.2026 Bulletin 2026/11**

(21) Application number: **22821956.4**

(22) Date of filing: **23.11.2022**

(51) International Patent Classification (IPC):
***C08F 136/06*** *(2006.01)* ***C08F 236/06*** *(2006.01)*
***C08L 9/00*** *(2006.01)* ***C08F 4/44*** *(2006.01)*
***C08C 19/20*** *(2006.01)*

(52) Cooperative Patent Classification (CPC):
**C08F 136/06; C08C 19/20; C08F 236/06; C08L 9/00**

(86) International application number:
**PCT/EP2022/082907**

(87) International publication number:
**WO 2023/193943 (12.10.2023 Gazette 2023/41)**

# (54) BRANCHED MODIFIED DIENE RUBBERS

VERZWEIGTE MODIFIZIERTE DIENKAUTSCHUKE

CAOUTCHOUCS DE DIÈNE MODIFIÉS RAMIFIÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.04.2022 EP 22167353**

(43) Date of publication of application:
**12.02.2025 Bulletin 2025/07**

(73) Proprietor: **ARLANXEO Deutschland GmbH**
**41540 Dormagen (DE)**

(72) Inventors:
- **HESPING, Lena**
  **40477 Düsseldorf (DE)**
- **RUENZI, Thomas**
  **40223 Düsseldorf (DE)**
- **PESCH, Kevin**
  **50226 Frechen (DE)**
- **ZHOU, Jiawen**
  **40223 Düsseldorf (DE)**
- **PESCH, Thomas**
  **51109 Köln (DE)**
- **GROSS, Thomas**
  **60489 Frankfurt (DE)**
- **KURZ, Arnd**
  **41844 Wegberg (DE)**

(56) References cited:
**EP-A1- 1 557 433**
**EP-A1- 1 978 057**
**EP-A1- 3 851 465**
**EP-A2- 1 650 227**
**WO-A1-2009/121516**
**WO-A1-2015/055511**
**US-A1- 2002 016 423**
**US-A1- 2012 165 485**
**US-A1- 2014 364 573**
**US-A1- 2016 237 259**
**US-A1- 2017 015 766**
**US-A1- 2017 107 358**
**US-A1- 2019 389 987**
**US-A1- 2022 010 105**
**US-B2- 10 005 857**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Background

Polybutadiene polymers are raw materials for many industrial items, in particular tires. They can be prepared at large scale using polymerization catalysts and catalyst systems as described for example in US2020/0123288 and US2002/0107339A1. These processes typically lead to highly linear polymers. Highly linear polybutadienes are known to improve rolling resistance and rebound resilience. Highly linear polybutadienes, however, tend to have a high solution viscosity and cold flow and are difficult to process. Processing of polybutadienes can be improved by introducing branches into the polymer structure. Various methods of introducing branching are known. The cold flow and processing properties of polybutadienes can be improved by modifying them with sulfur-based modifiers as described, for example, in US 5,567,784, and references cited therein. This modification increases the Mooney viscosity and creates polymer branches by sulfur links. According to US2022/0010105A1 the branching reaction with sulfur-based modifiers can be controlled by adding a phosphor ester. According to WO 2015/05055511 A1 the branching of butadiene polymers created by sulfur-based modifiers can be reversed by subjecting the polymers to a mastication reaction. According to US2016/0237259 A1 using butadiene polymers in blends with other functionalized polymers in rubber compositions can improve the properties of the rubber compositions.

Surprisingly, it has now been found that the properties of polybutadienes treated with sulfur-based modifiers can be further improved, in particular for applications in tires, by adjusting the branching degree in relation to the Mooney viscosity of the polymers, for example by using more branched polybutadienes instead of highly linear polybutadienes for treatment with the sulfur-based modifiers.

### Summary

Therefore, in one aspect there is provided a curable polybutadiene polymer comprising at least 60% by weight, preferably at least 80% by weight of units derived from butadiene, based on the total weight of the polymer, and wherein the polymer has a Mooney viscosity ML 1+4 at 100°C of from 42 to 150 MU, and a content of cis units of at least 96% by weight and wherein the polymer has been treated with at least one modifier to introduce branching or folding of the polymer chains and wherein the modifier is selected from the group consisting of sulfur-containing modifiers, polysulfur-containing modifiers or a combination thereof and wherein the polymer is branched and has a branching degree $\Delta\delta$ of 20 or less and satisfies the equation:

Mooney viscosity ML 1+4 at 100°C of the polymer / branching degree $\Delta\delta$ of the polymer $\geq 4.6$.

In another aspect there is provided a process of making the polybutadiene polymer comprising

(i) preparing a polybutadiene polymer by a polymerization reaction, preferably comprising the presence of at least one neodymium-comprising polymerization catalyst wherein the polymer has at least one of the following properties

a) a branching degree $\Delta\delta$ of 21 or less;

b) a Mooney viscosity ML 1+4 at 100°C of at least 25 and less than 90 Mooney units

c) a shear sensitivity of less than 1.50 MU*g/kWs,

(ii) treating the reaction mixture with at least one modifier to increase the branching and reduce the value of $\Delta\delta$ or to either increase the Mooney viscosity or the shear sensitivity or both, and wherein the modifier is selected from the group consisting of sulfur-containing modifiers, polysulfur-containing modifiers or a combination thereof to provide a polymer as described above.

In a further aspect there is provided an article comprising the polybutadiene polymer described above in a cured form and, preferably, the article is selected from a golf ball, a shoe sole, a hose, a belt, a tire or a tire tread or another component of a tire.

In yet another aspect there is provided a method of making an article comprising subjecting a composition comprising the polybutadiene polymer and at least one curing agent for curing the polybutadiene polymer to curing and shaping, wherein the shaping may take place during, before or after the curing.

In another aspect there is provided a polymer composition comprising at least 60% by weight, based on the total

weight of the composition which is 100%, preferably at least 95% by weight of the polybutadiene polymer.

In a further aspect there is provided a rubber compound comprising at least 5% by weight of the polybutadiene polymer and further comprising at least one filler or at least one curing agent capable of curing the polymer, or a combination of at least one filler and at least one curing agent.

## Detailed Description

The present disclosure will be further illustrated **in** the following detailed description.

In the following description certain standards (ASTM, DIN, ISO etc.) may be referred to. If not indicated otherwise, the standards are used in the version that was in force on March 1, 2020. If no version was in force at that date because, for example, the standard has expired, then the version is referred to **that was in** force at a date that is closest to March 1, 2020.

In the following description the amounts of ingredients of a composition or a polymer may be indicated interchangeably by "weight percent", "wt. %" or "% by weight". The terms "weight percent", "wt. %" or "% by weight" are based on the total weight of the composition or polymer, respectively, which is 100 % unless indicated otherwise.

The term "phr" means "parts per hundred parts of rubber", i.e., the weight percentage of an ingredient of a composition containing one or more rubber is based on the total amount of rubber which is set to 100% by weight.

Ranges identified in this disclosure are meant to include and disclose all values between the endpoints of the range and its end points, unless stated otherwise.

The terms "comprising", "containing" and "having" are used in an open, non-limiting meaning. For example, the phrase "a composition comprising ingredients A and B" is meant to include ingredients A and B but the composition may also have other ingredients. Contrary to the use of "comprising", "containing" or "having" the word "consisting of" is used in a narrow, limiting meaning. The phrase "a composition consisting of ingredients A and B" is meant to describe a composition of ingredients A and B and no other ingredients.

### Polybutadiene polymer compositions

The polybutadiene polymer compositions according to the present disclosure comprise, or consist of, one or more polybutadiene polymers. In one embodiment of the present disclosure the composition comprises at least 60% by weight, preferably at least 75% by weight, or at least 95% by weight, or at least 99% by weight of the polybutadiene polymer according to the present disclosure or more than one polybutadiene polymer according to the present disclosure, wherein the "% by weight" are based on the total weight of the composition which is 100%.

The polybutadiene polymers are curable and can be cured or cross-linked ("vulcanized") upon reaction with a curing agent or a curing system comprising at least one curing agent to produce vulcanized compositions.

The polybutadiene polymers according to the present disclosure include homopolymers and copolymers of 1,3-butadiene. Preferably, the polybutadiene polymer comprises at least 60% by weight, preferably at least 80% by weight or at least 95% by weight, or even at least 99% by weight of units derived from butadiene, wherein the "% by weight" are based on the total weight of the polymer.

In one embodiment of the present disclosure the polybutadiene polymers comprise from 0% to 49% by weight, preferably from 0% to 20% by weight, based on the total weight of the polymer, of units derived from one or more comonomers. Suitable comonomers include, but are not limited to, conjugated dienes - other than butadiene -having from 5 to 24, preferably from 5 to 20 carbon atoms. Specific examples include but are not limited to isoprene, 1,3-pentadiene, 2,3-dimethylbutadiene, 1-phenyl-1,3-butadiene, 1,3-hexadiene, myrcene, ocimene, farnesene and combinations thereof. The comonomers may be functionalized at one or more positions to provide functionalities other than carbon-hydrogen bonds. Such other functionalities may include cross-linking sites, for example additional unsaturations, or polar functional groups. Suitable comonomers also include, but are not limited to, one or more other co-polymerizable comonomers that introduce branches into the polymer backbone, for example non-conjugated dienes, preferably non-conjugated alpha-omega bisolefins, more preferably alpha-omega bis-dienes. Combinations of different comonomers may be used. In one embodiment of the present disclosure the polybutadiene polymer contains from 0 to 10% by weight of units derived from one or more comonomers, preferably from 0 to 5 % by weight and more preferably less than 1% by weight (based on the total weight of the polymer).

The butadiene monomers or the comonomers or both may be conventional materials but may also be obtained from sustainable materials, for example for reducing the carbon dioxide footprint. Sustainable materials include renewable or recycled materials. Renewable materials include but are not limited to monomers and comonomers produced by bacteria, which may be genetically modified or not, or obtained from plant-based materials. Recycled materials include monomers and comonomers obtained from recycling carbon-containing waste material for example by pyrolysis of carbon-containing material, which **may** include plant-based materials for example pulp or fibers or carbon-containing waste material.

The polybutadiene polymers according to the present disclosure may have a molecular weight distribution (MWD), i.e. a ratio of Mw/Mn, from 1.5 to 15. In one embodiment of the present disclosure the polymers have an MWD of from 1.5 to 7.5. or from 1.5 to 4. In a preferred embodiment the polymers have an MWD of 3.0 or less, for example from and including 2.0 and up to and including 3.0.

The polybutadiene polymers according to the present disclosure may have a glass transition temperature (Tg) of from -120°C to 0°C. In a preferred embodiment of the present disclosure the polymers have a Tg of from -110°C to -10°C, more preferably between -93°C and - 110°C.

The polymers according to the present disclosure may have a molecular weight (weight-average Mw) of from 100,000 to 2,500,000 g/mole. In one embodiment the polymers have an Mw of from 450 kg/mol to 1,000 kg/mol. The polymers according to the present disclosure may have a number-average molecular weight (Mn) of from 105, kg/mol to 650, kg/mol.

The polybutadiene polymers according to the present disclosure have a Mooney viscosity ML 1+4, at 100°C from 42 to 150 units, for example from 55 to 130 or from 60 to 129 units. In one embodiment of the present disclosure the polymers are provided having a low Mooney viscosity from 42 to 63 units, or, for example, from 43 to 60 units or from 46 to 58 units. In another embodiment of the present disclosure the polymers have a Mooney viscosity of 63 to 150 units, for example from 63 to 126 units, from 64 to 92 units or from 74 to 82 units. In one embodiment the modified polymers according to the present disclosure have a Mooney viscosity from 63 to 94, preferably from 63 to 86 units.

The curable polybutadiene polymers according to the present disclosure are branched and have a branching degree $\Delta\delta$ of 20 or less, preferably less than 19. For example, the polymers may have a $\Delta\delta$ of 8 to 17 or even from 6 to 13. The lower the branching degree the more branched is the polymer.

The curable polymers according to the present disclosure preferably have a shear sensitivity of at least 1.50 MU*g/kWs, preferably at least 2 MU*g/kWs.

The polybutadiene polymers according to the present disclosure are preferably prepared by a polymerization using a polymerization catalyst or catalyst system comprising at least one polymerization catalyst. After the polymerization or towards the end of the polymerization the polymers are subjected to a treatment with one or more modifiers to increase the Mooney viscosity of the polymers, or their degree of branching or their shear sensitivity or a combination thereof. Suitable polymers can be prepared by using nickel catalysts, cobalt catalysts, titanium catalysts, or rare earth catalysts. Rare-earth-catalyzed polybutadiene polymers may comprise more than 92 wt. % of cis-1,4 units. During the polymerization reaction the butadiene monomer ($CH_2$=CH-CH=$CH_2$) can be incorporated into the growing polymer chain as "1,4-cis", "1,4-trans" and "1,2-vinyl" repeat units. Units of the structure - $CH_2$-CH=CH-$CH_2$- are referred to as "1,4-cis units" or "cis-units" when both -$CH_2$ groups are on the same side of the double bond. When one of the -$CH_2$ groups is on one side of the double bond and the other one is on the opposite side of the double bond, the unit is referred to as "trans unit" or "1,4-trans unit". A "vinyl unit" or "1,2-vinyl unit" has the structure -$CH_2$-CH(CH=$CH_2$)-. The ratio of such units making up the polymer is referred to as the microstructure of the polymer. Typically, polybutadienes with a microstructure represented by a high percentage of cis units, for example at least 92% of cis units (based on the weight of the polymer) are desired because they lead to improved polymer properties.

Rare earth catalysts include catalysts containing neodymium, praseodymium, cerium, lanthanum, gadolinium and dysprosium or a combination thereof. In a more preferred embodiment, the polymerization is carried out comprising a neodymium catalyst. Preferably the polybutadiene polymer is prepared by using a Ziegler-Natta type rare earth, preferably neodymium, catalyst composition. Typically, a Ziegler-Natta type catalyst system contains at least three components: a rare earth metal source (e.g. neodymium source), a chloride source and an organo aluminum compound. Such catalyst systems are described, for example, in Canadian Patent application CA 1,143,711 A and US Patent Number 4,260,707, both incorporated herein by reference. The metal source may include an alkoxide, phosphate or carboxylate of the catalyst metal, (e.g. neodymium). Preferably, the metal source is selected from a metal carboxylate according to formula (1):

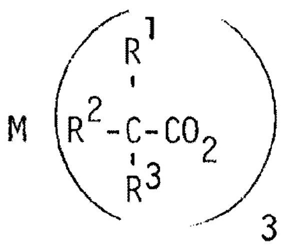

(1)

**wherein M represents** a rare earth metal selected from cerium, neodymium, praseodymium, gadolinium, lanthanum, preferably neodymium (Nd), and wherein $R^1$, $R^2$, and $R^3$, which may be the same or different, each represent an alkyl group having from 1 to 10 carbon atoms. Preferably, the sum of all the carbon atoms in the substituents $R^1$, $R^2$ and $R^3$ is

from 6 to 20. A particularly preferred metal source is neodymium versatate. A combination of different metal sources may be used also.

Suitable organo aluminum compounds include those according to the formula $Al(R^4)_3$, $Al(R^4)_2H$ and $Al(R^4)H_2$ wherein $R^4$ represents a aliphatic or aromatic hydrocarbon, preferably an alkyl group having from 1 to 10 carbon atoms, preferably ethyl or isobutyl. Specific examples include but are not limited to trimethylaluminum, triethylaluminum, tri-n-propylaluminum, triisopropylaluminum, tri-n-butylaluminum, triisobutylaluminum (TIBA), tri-t-butylaluminum, tripentylaluminum, trihexylaluminum, tricyclohexylaluminum, trioctylaluminum and dihydrocarbylaluminum hydrides including, for example, diethylaluminum hydride, di-n-propylaluminum hydride, diisopropylaluminum hydride, di-n-butylaluminum hydride, diisobutylaluminum hydride (DIBAH), di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, benzyl-n-octylaluminum hydride; and hydrocarbylaluminum dihydrides including, for example, ethylaluminum dihydride, n-propylaluminum dihydride, isopropylaluminum dihydride, n-butylaluminum dihydride, isobutylaluminum dihydride, and n-octylaluminum dihydride, and including combinations thereof. A preferred organo aluminum compound includes diisobutyl aluminum hydride.

The chloride source is preferably selected from an alkyl aluminum chloride, for example including but not limited to diethyl aluminium chloride, ethyl aluminium sesquichloride, ethyl aluminium dichloride and combinations thereof.

The catalyst composition may further contain a conjugated diene and may be preformed with it. The catalyst system may be preformed, partly or completely, i.e., generated before it is added to the polymerization reactor or its components may be added directly simultaneously or sequentially to the polymerization reactor, preferably dissolved in a solvent.

Polymers prepared with a neodymium-based catalyst or Nd catalyst system (Nd-catalyzed polybutadienes) typically have a content of cis-units of at least 92%, or at least 94%, or at **least 95%** or preferably at least 96%. In one embodiment of the present disclosure the polymer is prepared with a neodymium-based catalyst, preferably with a Ziegler-Natta type neodymium catalyst composition comprising a neodymium catalyst, a chloride source, and an organo aluminium hydride and, preferably, and the polymer has a cis-unit content of greater than 92%, greater than 94% or even greater than 96% by weight.

The polymerization preferably is carried out as solution polymerization. Typical reaction temperatures for the polymerization are between 60° C and 140° C. Suitable inert solvents include, for example, aromatic, aliphatic and cycloaliphatic hydrocarbons. Specific examples include but are not limited to benzene, toluene, pentane, n-hexane, isohexane, heptane, isomeric pentanes, methyl cyclopentane and cyclohexane. The solvents may be used individually or in combination or blended with one or more polar solvents. The inert organic solvents may be used in amounts of 200 to 900 parts by weight based on 100 parts by weight of monomers. The polymerization may be carried out continuously or batchwise. Processes as known in the art may be followed generally, including the industrial processes described, for example, in US2020/0123288 and US2002/0107339A1, and steps may be taken to create polymer branching because the polymers used for the modification with the sulfur-based modifiers preferably are already branched before their modification with the sulfur-containing modifier. Although the polymerization with rare earth catalysts generally leads to linear polymers, branched polymers can be produced by variations to the known processes. For example, polymer branching can be created by polymerizing at elevated temperatures (thermo-induced branching) for sufficient time (polymer conversion) as described, for example in US2013/0172489 A1. Another way includes the use of branching-inducing comonomers in the polymerization reaction, for example using non-conjugated dienes, for example alpha-omega poly- or bisolefins, for example alpha-omega dienes. Yet another way involves adjusting the components of the catalyst system and their amounts as described, for example, in US2011/112261A1.

By generating the polymer branches *in situ,* i.e., during the polymerization, the branches are connected to the polymer backbone by carbon-carbon bonds and not via heteroatoms. It is not relevant for making the polymers according to the present disclosure which method was used to generate the polymer branches except that branching preferably occurs during the polymerization and/or the branches preferably are connected to the polymer backbone by carbon-carbon bonds. Preferably, the polymers prior to modification with the sulfur-based modifier have a branching degree ($\Delta\delta$) of 21 or less, for example 19 or less. Typical ranges of $\Delta\delta$ include from 10 to 21, or 15 to 21. By treatment with the sulfur-based modifier the branching is further increased and the $\Delta\delta$ may be reduced. The polymers after the modification with the one or more sulfur-based modifiers preferably have a $\Delta\delta$ of 20 or less, preferably less than 19.

**For example,** the polymers resulting from modification treatment may have a $\Delta\delta$ of 8 to 17 or even 6 to 13.

The treatment with the sulfur-based modifiers may increase the Mooney viscosity of the polymers. The polymers subjected to the modification with the sulfur-based modifiers preferably have a Mooney viscosity ML 1+4, at 100°C of at least 25 and less than 90 Mooney units, preferably less than 72 Mooney units (MU). The modification treatment is carried

out such that the Mooney viscosity of the final polymer may be raised to the final polymer Mooney viscosity ML 1+4, at 100°C as described above, for example, but not limited to, Mooney viscosities of from 42 to 150 units, for example from 55 to 130 or from 60 to 129 units. In one embodiment of the present disclosure modified polymers are provided having a low Mooney viscosity from 42 to 63 units. In another embodiment of the present disclosure modified polymers are provided having a Mooney viscosity of 63 to 150 units, for example from 63 to 126. In one embodiment the modified polymers according to the present disclosure have a Mooney viscosity from 63 to 94, preferably from 63 to 86 units.

Preferably the polymers prior to modification with the sulfur-based modifiers have a shear sensitivity of less than 2 MU*g/kWs, preferably less than 1.5 MU*g/kWs. Preferably the modification treatment increases the shear sensitivity of the polymer. Preferably, the modified polymers according to the present disclosure, i.e., the polymers obtained after modification with the sulfur-based modifiers, have a shear sensitivity of at least 1.50 MU*g/kWs, preferably at least 2 MU*g/kWs.

In one embodiment of the present disclosure there is provided a process of making a modified polybutadiene polymer according to the present disclosure comprising

(i) preparing a polybutadiene polymer by a polymerization reaction, preferably comprising the presence of at least one neodymium-comprising polymerization catalyst wherein the polymer has at least one of the following properties

a) a branching degree $\Delta\delta$ of 21 or less;

b) a Mooney viscosity ML 1+4 at 100°C of at least 25 and less than 90 Mooney units

c) a shear sensitivity of less than 1.50 MU*g/kWs,

(ii) treating the reaction mixture with at least one modifier to increase branching and to reduce the value of $\Delta\delta$ or to either increase the Mooney viscosity or the shear sensitivity or both, and wherein the modifier is selected from the group consisting of sulfur-based modifiers, polysulfur-based modifiers or a combination thereof to provide a modified polymer according to the present disclosure.

The process does not require the use of phosphoric esters as disclosed in US2022/0010105A1 in [0039] to [0046], incorporated herein by reference. Preferably, the polymers according to the present disclosure are essentially free of phosphorous, preferably they have a content of phosphorous of less than 210 ppm including 0 ppm, preferably less than 200 ppm and including 0 ppm. The amount of phosphorous can be determined as described for example in US2022/0010105A1 in [0182].

The sulfur-based modifiers may be used as described in the art, for example, in US patent numbers: US 9,845,366, US 9,963,519 and US 5,567,784. The treatment with a sulfur-containing modifier may lead to incorporation of sulfur atoms into the polymer and to the creation of sulfur-carbon bonds in the polymer. The terms "sulfur-based modifier" and "sulfur-containing modifier" are used herein interchangeably. They both denote a modifier that comprises sulfur.

The amount of sulfur bonded to the polymer may be determined by measuring the sulfur content after the polymer has been subjected to extraction. The polybutadiene polymer according to the present disclosure may have a content of polymer-bound sulfur (measured after Soxhlet extraction of 1 g polymer sample with 50 mL of acetone (> 99% purity) under reflux for 48 hours) of from about 12 ppm to about 20,000 ppm, preferably from about 20 ppm to about 2,000 ppm based on the total weight of the polymer, or from 200 ppm to 3,000 ppm based on the total weight of the polymer. The extraction can be carried out to distinguish between polymer-bound sulfur and sulfur that may be present in the composition as part of stabilizers like antioxidants but that is not bound to the polymer. Extraction as described in the experimental section will remove the sulfur originating from additives.

The modified polymer is branched as result of the treatment with the modifier. However, since the polymer subjected to the modification was already branched as result of the polymerization conditions, the final polymer has at least two different types of polymer branches. One type of branching generated by the treatment with the one or more sulfur-based modifier, which may lead to polymer chains linked to other polymer chains via sulfur or polysulfur bridges. The other type of branches generated during the polymerization are based on carbon-carbon links bonds resulting from the polymerization.

The modification treatment may be carried out, preferably, in the reaction mixture, preferably after the polymerization was stopped and, preferably, before the work up procedure. Preferably, the treatment is carried out in the reaction mixture. The polymerization may be stopped prior to the treatment with the sulfur-based modifiers or afterwards, for example by adding materials that deactivate the catalyst. Such materials include protic materials including, for example, organic acids. The modifiers may be added at the same temperature or at higher or lower temperatures than the polymerization temperature. For example, the modifiers can be added without requiring the reaction temperature to be raised or lowered or after degassing as is described in the references cited above. The sulfur-based modifier may be added

as pure substance or as solution and may be added as solid, liquid or as a spray. The addition of the modifier may take place in the same polymerization reactor or in a different reactor or in a pipe. The amount of modifier to be used depends on the final branching degree $\Delta\delta$ and Mooney viscosity to be achieved as well as the initial branching degree and Mooney viscosity of the polymer. Suitable amounts are selected to achieve the desired $\Delta\delta$ and Mooney viscosity, and preferably also the desired shear sensitivity. Preferably, an appropriate amount of one or more sulfur modifiers are used to increase the Mooney viscosity and/or reduce the branching $\Delta\delta$ such that the value of the quotient of Mooney viscosity ML 1+4, 100°C / polymer $\Delta\delta$ is from 4.6 to 46, or from 4.6 to 26, or from 4.6 to 14. In one embodiment of the present disclosure the polymers have a ratio of polymer Mooney viscosity ML 1+4, 100°C / polymer $\Delta\delta$ of 4.6 to 8.8 or from 4.9 to 8.7. Typical amounts of modifying agent(s) may include from 0.005 to 2 parts by weight per hundred parts of polymer or from 0.007 to 0.5 parts per hundred parts of polymer or from 0.1 to 0.4 parts per hundred parts of polymer. Suitable sulfur-containing modifiers include sulfur halides, more preferably sulfur bromides and sulfur chlorides and polysulfur halides. Preferably, the sulfur-containing modifiers have between 1 to 8 sulfur atoms per molecule, preferably one or two sulfur atoms per molecule. Suitable examples include but are not limited to $S_2Cl_2$, $SCl_2$, $SOCl_2$, $S_2Br_2$, $SOBr_2$. It is contemplated that also functionalized sulfur-based modifiers containing a functional group R may be used. Examples of such modifying agents are described in US2016/0280815 A1. Another approach to introduce functional groups into the polymer may be achieved by functionalizing the polymer with polar comonomers prior to treatment with a sulfur-based modifier as described, for example, in European Patent EP 2 819 853 B1. In one embodiment of the present disclosure the polymer does not have any functional groups other than those created by a sulfur-based modifiers, which preferably is not further functionalized to contain any organic groups, i.e., groups having carbon and hydrogen atoms. In one embodiment the polymer does not have any functionalized end groups at least no functionalized end groups and/or in-chain functional groups generated by one or more functionalizing agents other than the sulfur-based modifiers.

The modified polymer can be provided as solution in a solvent or a mixture of solvents. The modified polymers can be isolated as known in the art, for example by removing the solvent, for example by stripping, for example steam stripping, or by coagulation achieved for example by adding a liquid in which the polymer is not soluble. Recovered solvents and monomers can be recycled. The polymer can be dried as known in the art and shaped into granules, compressed into bales or used as crumbs or powders. Therefore, in one embodiment according to the present disclosure there is provided a composition comprising at least 60% by weight, preferably at least 75 by weight, or at least 95% by of the polybutadiene or a combination of two or more polybutadiene according to the present disclosure, wherein the % by weight are based on the total weight of the composition which is 100%. The composition may be a liquid composition or a solid composition, preferably in the form of granules, bales, powders or sheets. The polybutadiene polymers according to the present disclosure, optionally, may be oil-extended. This means one or more extender oil may be added to the polymers, preferably to the reaction mixture. Suitable extender oils include processing oils as known in the art and as described further below. Therefore, in one embodiment according to the present disclosure there is provided a composition wherein the polybutadiene polymer is oil-extended and the composition comprises at least 60% by weight, preferably at least 75 by weight, or at least 95% by of the polybutadiene or a combination of two or more polybutadiene according to the present disclosure, and one or more than one extender oil, wherein the % by weight are based on the total weight of the composition which is 100%.

## Compounds

Compositions containing at least one polybutadiene polymer according to the present disclosure can be used for making rubber compounds. Therefore, in another aspect of the present disclosure there are provided rubber compounds comprising the polymer according to the present disclosure, preferably in an amount of at least 5% by weight based on the total weight of the compound. The rubber compounds may typically contain from 5% to 75%, or from 7 to 50% by weight, based on the total weight of the compound, of the polybutadiene polymer of the present disclosure.

Rubber compounds may additionally contain at least one filler. A rubber compound according to the present disclosure may contain at least 10% by weight, preferably at least 15% by weight, based on the weight of the compound, of one or more filler.

The rubber compounds may be, for example, in the form of a powder, in the form of granules, extruded pellets, sheets or bales. Such rubber compounds may further contain one or more rubber auxiliaries as will be described below, one or more curing agent, and/or one or more rubber other than the hydrogenated butadiene polymer.

## Filler

Preferably, the compound comprises at least one filler that is suitable for application in tires, tire components and materials for making tires. Preferably, the filler contains one or more silica, one or more carbon black or a combination of one or more silica and one or more carbon black. Preferably, the filler includes silica-containing particles, preferably having a BET surface area (nitrogen absorption) of from 5 to 1,000, preferably from 20 to 400 $m^2/g$. Such fillers may be obtained,

for example, by precipitation from solutions of silicates or by flame hydrolysis of silicon halides. Silica filler particles may have particle sizes of 10 to 400 nm. The silica-containing filler may also contain oxides of Al, Mg, Ca, Ba, Zn, Zr or Ti. Other examples of silicon-oxide based fillers include aluminum silicates, alkaline earth metal silicates such as magnesium silicates or calcium silicates, preferably with BET surface areas of 20 to 400 $m^2/g$ and primary particle diameters of 10 to 400 nm, natural silicates, such as kaolin and other naturally occurring silicates including clay (layered silicas). Further examples of fillers include glass particle-based fillers like glass beads, microspheres, glass fibers and glass fiber products (mats, strands).

Polar fillers, like silica-containing fillers may be modified to make them more hydrophobic. Suitable modification agents include silanes or silane-based compounds. Typical examples of such modifying agents include, but are not limited to compounds corresponding to the general formula (V):

$$(R^1R^2R^3O)_3Si\text{-}R^4\text{-}X \qquad (V)$$

wherein each $R^1$, $R^2$, $R^3$ is, independently from each other, an alkyl group, preferably $R^1$, $R^2$, $R^3$ are all methyl or all ethyl, $R^4$ is an aliphatic or aromatic linking group with 1 to 20 carbon atoms and X is sulfur-containing functional group and is selected from -SH, -SCN, - C(=O)S or a polysulfide group.

Instead of or in addition to silicas that have been modified as described such modification may also take place in situ, for example during compounding or during the process of making tires or components thereof, for example by adding modifiers, preferably silanes or silane-based modifiers, for example including those according to formula (V), when making the rubber compounds.

Filler based on metal oxides other than silicon oxides include but are not limited to zinc oxides, calcium oxides, magnesium oxides, aluminum oxides and combinations thereof. Other fillers include metal carbonates, such as magnesium carbonates, calcium carbonates, zinc carbonates and combinations thereof, metal hydroxides, e.g. aluminum hydroxide, magnesium hydroxide and combinations thereof, salts of alpha-beta-unsaturated fatty acids and acrylic or methacrylic acids having from 3 to 8 carbon atoms including zinc acrylates, zinc diacrylates, zinc methacrylates, zinc dimethacrylates and mixtures thereof.

In another embodiment of the present disclosure the rubber compound contains one or more fillers based on carbon, for example one or more carbon black. The carbon blacks may be produced, for example, by the lamp-black process, the furnace-black process or the gas-black process. Preferably, the carbon back has a BET surface area (nitrogen absorption) of 20 to 200 $m^2/g$. Suitable examples include but are not limited to SAF, ISAF, HAF, FEF and GPF blacks.

Other examples of suitable filler include carbon-silica dual-phase filler, lignin or lignin-based materials, starch or starch-based materials and combinations thereof.

In a preferred embodiment, the filler comprises one or more silica, carbon black or a combination thereof.

Typical amounts of filler include from 5 to 200 parts per hundred parts of rubber, for example, from 10 to 150 parts by weight, or from 10 to 95 parts by weight for 100 parts by total weight of rubber.

Fillers from a renewable or sustainable resource may be used, for example silica materials obtained from plants, like plant husks, including, for example rice husks. Carbon-based fillers may be obtained, for example, from recycled materials.

<u>Curing agents:</u>

Preferably the rubber compounds also contain at least one curing agent for curing the polybutadiene polymer. The curing agent is capable of crosslinking (curing) the polymer and is also referred to herein as "crosslinkers" or "vulcanization agent". Suitable curing agents include, but are not limited to, sulfur, sulfur-based compounds, and organic or inorganic peroxides. In a preferred embodiment the curing agent includes a sulfur. Instead of a single curing agent a combination of one or more curing agents may be used, or a combination of one or more curing agent with one or more curing accelerator or curing catalysts may be used. Examples of sulfur-containing compounds acting as sulfur-donors include but are not limited to sulfur, sulfur halides, dithiodimorpholine (DTDM), tetramethylthiuramdisulphide (TMTD), tetraethylthiuramdisulphide (TETD), and dipentamethylenthiuramtetrasulphide (DPTT). Examples of sulfur accelerators include but are not limited to amine derivates, guanidine derivates, aldehydeamine condensation products, thiazoles, thiuram sulphides, dithiocarbamates and thiophospahtes. Examples of peroxides used as vulcanizing agents include but are not limited to di-tert.-butyl-peroxides, di-(tert.-butyl-peroxy-trimethylcyclohexane), di-(tert.-butyl-peroxy-isopropyl-) benzene, dichloro-benzoylperoxide, dicumylperoxides, tert.-butyl-cumyl-peroxide, dimethyl-di(tert.-butyl-peroxy)hexane and dimethyl-di(tert.-butyl-peroxy)hexine and butyl-di(tert.-butyl-peroxy)valerate. A vulcanizing accelerator of sulfene amide-type, guanidine-type, or thiuram-type can be used together with a vulcanizing agent as required.

If added, the vulcanizing agent is typically present in an amount of from 0.5 to 10 parts by weight, preferably of from 1 to 6 parts by weight per 100 parts by weight of rubber.

Other rubbers

The rubber compounds and compositions according to the present disclosure may contain one or more additional rubber other than the polybutadiene polymers of the present disclosure. Examples of such other rubbers include but are not limited to high-vinyl polybutadienes (i.e. vinyl content of at least 10% by weight), copolymers of butadiene with C1-C4-alkyl acrylates, chloroprenes, polyisoprenes, styrene-butadiene copolymers, isobutylene-isoprene copolymers, butadiene-acrylonitrile copolymers, including those having an acrylonitrile content of from 5 wt. % to 80 wt. %, for example those with an acrylonitrile content of from 10 wt. % to 40 wt. %; partially or fully hydrogenated acrylonitrile rubber, ethylene-propylene-diene copolymers, natural rubber and combinations thereof. Typical amounts of the one or more other rubbers in the compound may include, for example, from 5 to 500 parts per hundred parts of the polybutadiene polymer.

In a preferred embodiment of the present disclosure the rubber compound contains at least one styrene-butadiene copolymer, preferably in an amount of from 5% to 65% by weight, or from 10% to 50% by weight based on the total weight of the compound. The styrene-butadiene copolymer may be modified to contain one or more than one functional group comprising one or more than one atom selected from Si, O, N and S atoms, preferably the functional group comprises Si and O atoms. The functional group may be situated at the terminal position of the polymer in case of $\alpha$-, $\omega$- or $\alpha$- and $\omega$-functionalization as described, for example, in international patent application WO2021/009156 A1; US patent applications US 2016/0083495 A1 and US2016/0075809 A1, and in European patent application EP 2847264 A1. The functional group may also be a pending group, e.g., as part of an in-chain-functional group, for example by treatment with mercapto acids, or mercapto polyethers as described, for example, in US 6,521,698 B2. Other suitable polymers that may be blended with the polymers according to the present disclosure include those described in US2016/0237259A1. The combination with such functionalized styrene-butadiene rubbers in a tire composition with silica filler or carbon-based fillers or both may in particular improve dynamic properties, represented by tan d 0° C / tan d 60° C, as well as tensile properties, including S300, S300/S100, tensile strength or elongation at break or a combination thereof. Typical mass ratios of polymers according to the present disclosure to functional polymers include ratios from 3 : 1 to 1 : 3.

Other rubber auxiliaries:

The compositions and rubber compounds containing the polybutadiene polymers according to the present disclosure may contain one or more further rubber auxiliaries as known in the art of rubber compounding and processing. Such further auxiliaries include but are not limited to curing reaction accelerators, antioxidants, heat stabilizers, light stabilizers, processing aids, plasticizers, tackifiers, blowing agents and colorants. Processing aids include organic acids, waxes and processing oils. Examples of oils include but are not limited to MES (Mild Extraction Solvate), TDAE (Treated Distillate Aromatic Extract), RAE (Residual Aromatic Extract) and light and heavy naphthenic oils and vegetable oils. Specific examples of commercial oils include those with the trade designations Nytex 4700, Nytex 8450, Nytex 5450, Nytex 832, Tufflo 2000, and Tufflo 1200. Examples of oils include functionalized oils, particularly epoxidized or hydroxylated oils.

Activators include triethanolamine, polyethylene glycol, hexanetriol. Colorants include dyes and pigments and may be organic or inorganic and include, for example, zinc white and titanium oxides.

The further rubber auxiliaries may be used in appropriate amounts depending on the intended use as known in the art. Examples of typical amounts of individual or total amounts of auxiliaries include from 0.1 wt. % to 50 wt. % based on the total weight of rubber in the compound.

For making the rubber compounds a polybutadiene polymer composition according to the present disclosure can be blended with one or more of ingredients by means known in the art of rubber processing, for example by using rolls, internal mixers and mixing extruders. The fillers are preferably admixed to the solid polybutadiene polymer composition or to a mixture of it with other rubbers as known in the art, for example by using a kneader. Fillers may be added as solids, or as slurry or otherwise as known in the art.

Vulcanizates

Rubber vulcanizates are obtainable by subjecting the rubber compounds, i.e. compositions comprising a polybutadiene polymer of the present disclosure and at least one curing agent, to curing, for example to one or more curing steps. Curing can be carried out as known in the art. Curing is commonly carried out at temperatures between 100 to 200° C, for example between 130 to 180° C. Curing may be carried out in molds under pressure. Typical pressures include pressures of 10 to 200 bar. Curing times and conditions depend on the actual composition of rubber compounds and the amounts and types of curatives and curable components.

Articles

The compositions and compounds according to the present disclosure can be used to make articles. Typically, the articles comprise the polybutadiene polymer compositions according to the present disclosure in a cured form, for example, as a result of one or more curing reactions. The compositions and compounds provided in the present disclosure are particularly suitable for making tires or components of tires. The tires include pneumatic tires. The tires include tires for motor vehicles, aircrafts and electric vehicles and hybrid vehicles, i.e., vehicles that can be driven by a combustion engine or an electric engine or batteries. Typical components of tires include inner liner, treads, undertreads, carcass, and the sidewalls.

In one embodiment the compositions and compounds according to the present disclosure are used as a sealing material, for example for making O-rings, gasket or any other seal or component of seals.

In one embodiment the compositions or compounds according to the present disclosure are used as impact modifiers for thermoplastics including polystyrenes and styrene-acrylonitriles.

In another embodiment the compositions or compounds according to the present disclosure are used for making golf balls or components thereof. In another embodiment the compositions or compounds according to the present disclosure are used to make shaped articles selected from profiles, membranes, damping elements and hoses.

The articles may be obtained by subjecting the curable rubber compound of the present disclosure to curing and shaping. The shaping step may take place during or after the curing step or also prior to curing step. A single curing and/or shaping step may be used or a plurality of curing and/or shaping steps may be used. Additional ingredients may be added to the compositions of the present disclosure as required for making the articles.

Therefore, in one aspect of the present disclosure there is provided an article comprising the polybutadiene polymer according to the present disclosure in a cured form. Preferably, the article is selected from a golf ball, a shoe sole, a hose, a belt, a tire or a tire tread or another component of a tire. In another aspect of the present disclosure there is provided a method for making an article comprising subjecting the composition according to the present disclosure comprising at least one curable polybutadiene according to the present disclosure and at least one curing agent for curing the polybutadiene polymer to curing and shaping, wherein the shaping may take place during, before or after the curing.

In the following the present disclosure is further illustrated by specific embodiments and examples without, however, any intention to limit the present disclosure to these specific embodiments and examples.

## Methods

*Content of cis, trans and vinyl units:*

The content of vinyl, cis and trans units in the polymer can be determined by FT-IR spectrometry using the absorbances and absorbance ratios as described in the standard ISO 12965:2000(E).

*Mooney viscosity:*

The Mooney viscosity of the polymer was determined according to the standard ASTM D1646 (1999) using a 1999 Alpha Technologies MV 2000 Mooney viscometer.

*Mooney stress relaxation* (MSR):

Mooney Stress Relaxation (MSR) was determined in according to ASTM D 1646-00 at a temperature of 100°C.

*Molecular weight and molecular weight distribution:*

Molecular weight (number averaged molecular weight (Mn), the weight averaged molecular weight (Mw)) and the molecular weight distribution (MWD = Mw/Mn)) were determined by gel permeation chromatography (GPC). A modular system from Agilent, Santa Clara, CA, USA was used comprising an Agilent 1260 Refractive Index Detector, Agilent 1260 Variable Wavelength Detector, 1260 ALS autosampler, column oven (Agilent 1260 TCC), Agilent 1200 Degasser, Agilent 1100 Iso Pump and a column combination of 3 PLgel 10 μm Mixed B300x7.5 mm columns from Agilent. Tetrahydrofuran (THF) was used as solvent. Polystyrene standards from PSS Polymer Standards Service GmbH (Mainz, Germany) were used. The polymer samples dissolved in THF were filtered through syringe filters (0.45 μm PTFE membranes, diameter 25 mm). The measurements were conducted at 40 °C and with a flow rate of 1 mL/min.

*Glass transition temperature:*

The glass transition temperatures (Tg) were determined by differential thermoanalysis (DTA, differential scanning calorimetry (DSC)) on a 2003 Perkin Elmer DSC-7 calorimeter. 10 mg to 12 mg of the polymer were place on a DSC sample holder (standard aluminum pan) from Perkin Elmer. Two cooling/heating cycles were conducted and the Tg was determined in the second heating cycle. The first DSC cycle was conducted by first cooling the sample down to -100°C with liquid nitrogen and then heating it up to +150°C at a rate of 20 K/min. The second DSC cycle was commenced by cooling of the sample as soon as a sample temperature of +150°C had been reached at a cooling rate of about 320 K/min. In the second heating cycle, the sample was heated up again to +150°C at a heating rate of 20 K/min. The Tg was determined from the graph of the DSC curve of the second heating operation.

*Content of polymer-bound sulfur:*

1 g polymer sample is cut into smaller pieces and extracted by Soxhlet extraction with 50 mL of acetone (> 99% purity) under reflux for 48 hours. After extraction the polymer is dried at 60 °C in a vacuum oven. The subsequent quantification of the sulfur amount (bound sulfur) is conducted via Combustion Ion Chromatography (CIC). CIC machines are commercially available, for example, from Thermo Fisher Scientific (for example Fisher Scientific GmbH, Schwerte, Germany). They typically have two coupled units: one is an automated digestion unit having an autosampler, a combustion unit (electric heater) and an absorption module. The second unit is an Ion Chromatography unit for quantification. For the measurement the polymer sample is weighed into a ceramic boat and is then pyrohydrolytically oxidized in an argon-oxygen atmosphere. The analyte gases are absorbed in a hydrogen peroxide solution and automatically transferred to the ion chromatograph, where sulfur is measured as sulfate anion.

*Branching degree (Delta delta, $\Delta\delta$):*

The branching degree was determined on a SIS V50 Rubber Process Analyser (RPA) in frequency mode consisting of 20 frequencies (equidistant on a logarithmical scale) starting at 0.01 Hz to 40 Hz at a temperature of 100° C and an amplitude of 0.5°. Polyamide-6,6 foil was used. After a pre-heating phase of 5 minutes, the measurement was performed with three pre-cycles and three measurement cycles per frequency. The Delta delta ($\Delta\delta$) is the difference in phase angle delta at 0.1 and 100 rad/s.

*Shear sensitivity:*

The shear sensitivity was measured on an intermeshing mixing device GK1.5E from Werner & Pfleiderer equipped with a PES 5 rotor. The mixer was preheated to 80° C, then the test material was charged into the mixer at 72% filling degree and mixed with 50 rpm for 3 mins. The test material was discharged, and the Mooney viscosity of the test material was measured. The specific mixing energy for the mixing step was measured. This procedure was repeated for 5 mins with a new sample of the test material. Then the procedure was repeated with new samples of test material for 8 mins mixing time and with a new sample of test material for 12 mins of mixing time.

The shear sensitivity (in MU*g/kWs) is then calculated as the absolute value of the slope of the linear regression curve obtained by plotting the polymer Mooney viscosities against the corresponding specific mixing energy. Values for specific mixing energies smaller than 0.5 kWs/g and mixing energies for a Mooney reduction greater than 15% of the initial Mooney viscosity before the treatment were not taken into consideration for the linear regression.

*Ratio MV/$\Delta\delta$:*

The ratio is calculated from the measurements obtained for the Mooney viscosity (MV) and the branching degree $\Delta\delta$. The average value from three measurements was used. The Mooney units used in the calculation included the first decimal place. The $\Delta\delta$ values used in the calculation included the first and second decimal places.

Properties of curable compounds

*Mooney viscosity:*

The Mooney viscosity (measuring conditions ML (1+4) at 100°C) of the curable compounds was determined according to ISO 289-1 on an Alpha Technology Mooney MV 2000, from 1999.

*Monsanto MDR:*

The Monsanto MDR was determined according to ISO 6502 on an Alpha Technology Rheometer MDR 2000 E.

Properties of vulcanized polymers and compounds

*Hardness:*

Shore A hardness at 60° C was determined according to DIN 53505.

*Rebound resilience:*

Rebound resilience at 60° C was determined according to DIN 53512.

*Mechanical Stress:*

Stress values at 10%, 100% and 300% elongation ($\sigma$10, $\sigma$100 and $\sigma$300), tensile strength and elongation at break were determined according to DIN 53504 on an S2 test device at 10 kN on a roboTest R robotic test system from ZwickRoelln, Ulm, Germany.

*Abrasion:*

Abrasion was determined according to DIN 53516.

*Dynamic properties:*

Dynamic properties were determined according to DIN53513-1990 on Eplexor 500 N from Gabo-Testanlagen GmbH, Ahlden, Germany at 10 Hz in the temperature range from -100° C to +100° C at a heating rate of 1 K/min with a constant strain of 0.9% and a dynamic strain of 0.1% (Sample: strips with l*w*t = 60mm*10mm*2mm; free length between sample holder 30mm). The following properties were determined this way: E' (60° C.): storage modulus at 60° C; E' (23° C.): storage modulus at 23° C; E' (0° C.): storage modulus at 0° C; tan $\delta$ (60° C), i.e. the loss factor (E"/E') at 60° C; tan $\delta$ (23° C), i.e., the loss factor (E"/E') at 23° C and tan $\delta$ (0° C), i.e. the loss factor (E"/E') at 0° C. E' provides an Indication of the grip of a winter tire tread on ice and snow. As E' decreases, grip improves. tan $\delta$ (60° C.) is a measure of hysteresis loss from the tire under operating conditions. As tan $\delta$ (60° C.) decreases, the rolling resistance of the tire decreases. tan $\delta$ (0° C.) is a measure for the wet grip of the material. As tan $\delta$ (0° C) increases the wet grip increases.

*Elastic Properties:*

Elastic properties were determined according to DIN53513-1990. An elastomer test system (MTS Systems GmbH, 831 Elastomer Test System) was used. The measurements were carried out in double shear mode with no static pre-strain in shear direction and oscillation around 0 on cylindrical samples (2 samples each 20$\times$6 mm, pre-compressed to 5 mm thickness) and a measurement frequency of 10 Hz in the strain range from 0.1 to 40%. The method was used to obtain the following properties:
G' (0.5%): dynamic modulus at 0.5% amplitude sweep, G' (15%): dynamic modulus at 15% amplitude sweep, G' = G' (0.5%) - G' (15%): difference of dynamic modulus at 0.5% relative to 15% amplitude sweep, tan $\delta$ (max): maximum loss factor (G"/G') of entire measuring range at 60° C.

The difference of G' (0.5%) - G' (15%) is an indication of the Payne effect of the mixture. The lower the value the better the distribution of the filler in the mixture, the better the rubber-filler interaction and the lower the risk of phase separation. Tan $\delta$ (max) is another measure of the hysteresis loss from the tire under operating conditions. As tan $\delta$ (max) decreases, the rolling resistance of the tire decreases.

**Examples**

The polymers of comparative examples C1 and C2 were polybutadiene rubbers that were not treated with the modifying agent to increase their Mooney viscosity. The polymer of comparative example C3 was subjected to a treatment with a modifier to have a similar Mooney viscosity as the polymer of comparative example C2. For examples Ex1 to Ex5 polybutadienes were used that were more branched than that of C3. They were also treated with the modifying agent to reach a ratio of MV/$\Delta\delta$ of greater than 4.6. All polymers were prepared with the same Nd-based catalyst system and had a

1.4 cis content of >96 % wt. The modifying agent was $S_2Cl_2$ and the modification was carried out by adding from 0.025 to 0.135 g per 100 g of polymer depending on the branching degree and Mooney viscosity to the reaction mixture (at 50 - 110 °C for 10 - 300 mins).

Table 1: polymer properties.

| | C1 | C2 | C3 | Ex1 | Ex2 | Ex3 | Ex4 | Ex5 |
|---|---|---|---|---|---|---|---|---|
| Base MV | | | 43.4 | 43.7 | 43.7 | 50.8 | 62.7 | 62.7 |
| Base Dd | | | 22.2 | 19.8 | 19.8 | n.m. | 18.5 | 18.5 |
| Base SS | | | 0.79 | 0.95 | 0.95 | n.m. | 1.23 | 1.23 |
| Final MV | 43 | 63 | 63 | 64.3 | 75.1 | 79.3 | 78.6 | 75.4 |
| Final Dd | 20.53 | 25.62 | 14 | 10.97 | 15.15 | 10.87 | 8.92 | 15.02 |
| Final SS | 0.95 | 1.23 | 3.67 | 3.62 | 4.11 | 3.78 | 2.07 | 2.75 |
| Relative SS | 1 | 1.29 | 3.86 | 3.81 | 4.33 | 3.89 | 2.18 | 2.89 |
| Final MV/Dd | 2.09 | 2.46 | 4.50 | 5.86 | 4.95 | 7.0 | 8.81 | 5.02 |
| Mw/Mn | <3.0 | <3.0 | <3.0 | 2.7 | 2.7 | 2.7 | 2.8 | 2.7 |
| MSR | 0.590 | 0.700 | 0.441 | 0.419 | 0.491 | 0.410 | 0.388 | 0.486 |
| MV = Mooney viscosity [Mooney units], Dd = branching degree $\Delta\delta$; SS = shear sensitivity [MU*g/kWs], Base = polymer before treatment with modifier; Final = polymer after treatment with modifier; n.m. = not measured. | | | | | | | | |

Several compounds were prepared with samples ("Polymer") of comparative examples 2 and 3 (C2 and C3) and examples 1 to 5 (Ex1 to Ex5) with the ingredients and amounts shown in table 2.

Table 2: compound ingredients.

| Ingredient | phr |
|---|---|
| Polymer of examples C2, C3, Ex1, Ex2, Ex 3, Ex 4 or Ex 5 | 30 |
| BUNA VSL 3038-2 HM | 96.25 |
| VULCAN J/N375 | 5 |
| ULTRASIL 7000 GR | 90 |
| VIVATEC 500 | 4.8 |
| AFLUX 37 | 3 |
| PALMERA A9818 | 1 |
| VULKANOX 4020/LG | 2 |
| VULKANOX HS/LG | 2 |
| RHENOGRAN DPG-80 | 2.5 |
| ANTILUX 654 | 2 |
| SI 69 | 7.2 |
| RHENOGRAN ZNO-80 | 3.75 |
| RHENOGRAN TBBS-80 | 2 |
| ground sulfur | 1.7 |

The resulting compounds had Mooney viscosities as shown in table 3.

Table 3: compound composition and Mooney viscosities

| | C4 | C5 | Ex 6 | Ex7 | Ex8 | Ex9 | Ex10 |
|---|---|---|---|---|---|---|---|
| Compound produced with polymer of example | C2 | C3 | Ex1 | Ex2 | Ex3 | Ex4 | Ex5 |
| Mooney viscosity of compound (ML1+4, 100°C) | 93.2 | 86.3 | 85.9 | 86.7 | 88.4 | 94.0 | 90.7 |
| Curing MDR at 160°C (Delta S') dNm | 15.63 | 15.21 | 16.2 | 15.82 | 15.83 | 15.51 | 15.44 |

The compounds were cured at 160° C, the vulcanization times were set based on the T95 value of the rheometer vulcanization time. The properties of the cured compounds are shown in tables 4 and 5.

Table 4: dynamic and elastic properties of the compounds

| | C4 | C5 | Ex 6 | Ex7 | Ex8 | Ex9 | Ex10 |
|---|---|---|---|---|---|---|---|
| Temperature Sweep 0.9% +/-0.1%, 10 Hz | | | | | | | |
| tan d 0°C | 0.386 | 0.343 | 0.416 | 0.418 | 0.417 | 0.351 | 0.397 |
| tan d 60°C | 0.089 | 0.092 | 0.088 | 0.088 | 0.086 | 0.091 | 0.092 |
| tan d 0°C / tan d 60°C | 4.34 | 3.73 | 4.73 | 4.75 | 4.85 | 3.86 | 4.32 |
| tan d 0°C / tan d 60°C relative to C5 | | 100 | 127 | 127 | 130 | 103 | 116 |
| Amplitude Sweep 60°C, 10 Hz | | | | | | | |
| G'(0.5%) | 2.48 | 2.66 | 2.49 | 2.46 | 2.58 | 2.54 | 2.6 |
| G'(15%) | 1.22 | 1.27 | 1.25 | 1.21 | 1.26 | 1.24 | 1.25 |
| G'(0.5%)-G'(15%) | 1.26 | 1.39 | 1.24 | 1.25 | 1.32 | 1.3 | 1.35 |
| G'(0.5%)-G'(15%) relative to C5 | | 100 | 112 | 111 | 105 | 107 | 103 |

Table 5: other properties of the compounds

| | C4 | C5 | Ex 6 | Ex7 | Ex8 | Ex9 | Ex10 |
|---|---|---|---|---|---|---|---|
| Tensile measurements at 23°C S300/S100 | 6.0 | 5.86 | 6.15 | 6.16 | 6.31 | 5.90 | 5.86 |
| Rebound at 60°C | 57.5 | 57 | 58.5 | 57.5 | 58.5 | 60.5 | 60 |
| Abrasion (DIN 53516 (ISO 4649)) | 123.0 | 112.7 | 116.7 | 116.7 | 117.7 | 107.3 | 114.7 |
| Hardness (Shore A, 23°C) | 63.2 | 62.3 | 62.1 | 62.2 | 61.9 | 62.7 | 62.6 |

A comparison of comparative examples C4 and C5 confirms that modification (C5) improves the processability (reduces the compound Mooney viscosity) and abrasion properties compared to a non-modified polymer (C4).

A comparison of comparative example C5 with the examples according to the present disclosure (Ex6 - Ex10) demonstrates that modification of the polymers to reach a MV/$\Delta\delta$ ratio of greater than 4.5 increases the performance of the modified polymers, in particular the tan d 0°C values (wet grip indicator) and the ratio of tan d 0°C/ tan d 60°C (balance of wet grip and rolling resistance). The Payne Effect (G' (0.5%)-G' (15%)) was significantly improved indicating better filler dispersion.

## Claims

1. A curable polybutadiene polymer comprising at least 60% by weight, preferably at least 80% by weight of units derived from butadiene, based on the total weight of the polymer, and wherein the polymer has a Mooney viscosity ML 1+4 at 100°C of from 42 to 150 MU, and a content of cis units of at least 96% by weight and wherein the polymer has been treated with at least one modifier to introduce branching or folding of the polymer chains and wherein the modifier is selected from the group consisting of sulfur-containing modifiers, polysulfur-containing modifiers or a combination thereof and wherein the polymer is branched and has a branching degree $\Delta\delta$ of 20 or less and satisfies the equation: Mooney viscosity ML 1+4 at 100°C of the polymer / branching degree $\Delta\delta$ of the polymer $\geq$ 4.6 and wherein all

parameters were determined by methods as described in the method section of the description.

2. The polymer according to claim 1 wherein the polybutadiene polymer either has a Mooney viscosity ML 1+4 at 100°C of from 63 to 150 Mooney units or a Mooney viscosity ML 1+4 at 100°C of from 44 to 63 Mooney units.

3. The polymer according to any one of the preceding claims wherein the polybutadiene polymer has been prepared by a polymerization reaction comprising at least one neodymium-comprising polymerization catalyst.

4. The polymer according to any of the preceding claims wherein the sulfur-containing modifier comprises a sulfur halide having from 1 to 8 sulfur atoms per molecule.

5. The polymer according to any one of the preceding claims the sulfur-containing modifier is selected from $S_2Cl_2$, $SCl_2$, $SOCl_2$, $S_2Br_2$, $SOBr_2$ and a combination thereof.

6. The polymer according to any one of the preceding claims wherein the polymer has a shear sensitivity of greater than 1.50 MU*g/kWs, preferably greater than 2.0 MU*g/kWs, as determined by the method described in the method section.

7. The polymer according to any one of the preceding claims wherein the polymer has either a branching degree $\Delta\delta$ of 19 or less, preferably a $\Delta\delta$ from 5 to 19, or has a value from 4.9 to 8.7 for the quotient of Mooney viscosity ML 1+4 at 100°C / branching degree $\Delta\delta$, or both.

8. The polymer according to any one of the preceding claims having a molecular weight distribution (MWD) of 3.0 or less, preferably from and including 2.0 and up to and including 3.0 wherein the MWD is determined by dividing the weight average molecular weight (Mw) by the molecular average molecular weight (Mn) - both determined by gel chromatography-according to the equation:

$$MWD = Mw/Mn.$$

9. A polymer according to any one of the preceding claims wherein the polymer is oil-extended wherein, optionally, the weight ratio of polymer to extender oil is from 10:1 to 1:2.

10. A polymer composition comprising at least 60% by weight, based on the total weight of the composition which is 100%, preferably at least 95% by weight of at least one polybutadiene polymer as defined in any one of the preceding claims.

11. A rubber compound comprising at least 5% by weight of the polymer according to any one of the preceding claims 1 to 9 and further comprising at least one filler or at least one curing agent capable of curing the polymer or a combination of at least one filler and at least one curing agent.

12. A process of making a polybutadiene polymer according to any one of preceding claims 1 to 8 comprising

(i) preparing a polybutadiene polymer by a polymerization reaction, preferably comprising the presence of at least one neodymium-comprising polymerization catalyst, wherein the polymer has at least one of the following properties

a) a branching degree $\Delta\delta$ of 21 or less;
b) a Mooney viscosity ML 1+4 at 100°C of at least 25 and less than 90 Mooney units;
c) a shear sensitivity of less than 1.50 MU*g/kWs,

(ii) treating the reaction mixture with at least one modifier to increase the branching and reduce the value of $\Delta\delta$ or to either increase the Mooney viscosity or the shear sensitivity or both, wherein the modifier is selected from the group consisting of sulfur-containing modifiers, polysulfur-containing modifiers or a combination thereof, to provide a polymer as defined in any one of claims 1 to 11; and, optionally,
(iii) isolating the polybutadiene polymer.

13. The process according to claim 12 wherein the modifying agent is selected from the group consisting of sulfur-containing modifiers and polysulfur-containing modifiers and combinations thereof, and, preferably, is selected from

one or more sulfur halides having from 1 to 8 sulfur atoms per molecule, preferably 1 or 2 sulfur atoms per molecule, and, more preferably, selected from $S_2Cl_2$, $SCl_2$, $SOCl_2$, $S_2Br_2$, $SOBr_2$ and combinations thereof.

**14.** An article comprising the polybutadiene polymer according to any one of claims 1 to 9 in a cured form, preferably, the article is selected from a golf ball, a shoe sole, a hose, a belt, a tire or a tire tread or another component of a tire.

**15.** Method of making an article comprising subjecting a composition comprising at least one polybutadiene polymer as defined in any one of claims 1 to 9 and at least one curing agent for curing the polybutadiene polymer to curing and shaping, wherein the shaping may take place during, before or after the curing.

**Patentansprüche**

**1.** Härtbares Polybutadienpolymer, umfassend mindestens 60 Gew.-%, vorzugsweise mindestens 80 Gew.-%, von Butadien abgeleitete Einheiten, bezogen auf das Gesamtgewicht des Polymers, und wobei das Polymer eine Mooney-Viskosität ML 1+4 bei 100 °C von 42 bis 150 MU und einen Gehalt an cis-Einheiten von mindestens 96 Gew.-% aufweist und wobei das Polymer mit mindestens einem Modifikator zur Einführung von Verzweigung oder Faltung der Polymerketten behandelt wurde und wobei der Modifikator aus der Gruppe bestehend aus schwefelhaltigen Modifikatoren, polyschwefelhaltigen Modifikatoren oder einer Kombination davon ausgewählt ist und wobei das Polymer verzweigt ist und einen Verzweigungsgrad $\Delta\delta$ von 20 oder weniger aufweist und die Gleichung erfüllt: Mooney-Viskosität ML 1+4 bei 100 °C des Polymers / Verzweigungsgrad $\Delta\delta$ des Polymers $\geq$ 4,6 und wobei alle Parameter nach Verfahren bestimmt wurden, wie sie im Verfahrensteil der Beschreibung beschrieben sind.

**2.** Polymer nach Anspruch 1, wobei das Polybutadienpolymer entweder eine Mooney-Viskosität ML 1+4 bei 100 °C von 63 bis 150 Mooney-Einheiten oder eine Mooney-Viskosität ML 1+4 bei 100 °C von 44 bis 63 Mooney-Einheiten aufweist.

**3.** Polymer nach einem der vorhergehenden Ansprüche, wobei das Polybutadienpolymer durch eine Polymerisationsreaktion mit mindestens einem Neodym enthaltenden Polymerisationskatalysator hergestellt wurde.

**4.** Polymer nach einem der vorhergehenden Ansprüche, wobei der schwefelhaltige Modifikator ein Schwefelhalogenid mit 1 bis 8 Schwefelatomen pro Molekül umfasst.

**5.** Polymer nach einem der vorhergehenden Ansprüche, wobei der schwefelhaltige Modifikator aus $S_2Cl_2$, $SCl_2$, $SOCl_2$, $S_2Br_2$, $SOBr_2$ und einer Kombination davon ausgewählt ist.

**6.** Polymer nach einem der vorhergehenden Ansprüche, wobei das Polymer eine Scherempfindlichkeit von mehr als 1,50 MU*g/kWs, vorzugsweise mehr als 2,0 MU*g/kWs, aufweist, wie nach dem im Verfahrensteil beschriebenen Verfahren bestimmt.

**7.** Polymer nach einem der vorhergehenden Ansprüche, wobei das Polymer entweder einen Verzweigungsgrad $\Delta\delta$ von 19 oder weniger, vorzugsweise einen $\Delta\delta$ von 5 bis 19, aufweist oder einen Wert von 4,9 bis 8,7 für den Quotienten von Mooney-Viskosität ML 1+4 bei 100 °C / Verzweigungsgrad $\Delta\delta$ aufweist oder beides.

**8.** Polymer nach einem der vorhergehenden Ansprüche mit einer Molekulargewichtsverteilung (MWD) von 3,0 oder weniger, vorzugsweise von und einschließlich 2,0 und bis und einschließlich 3,0, wobei die MWD durch Dividieren des gewichtsmittleren Molekulargewichts (Mw) durch das molekularmittlere Molekulargewicht (Mn) - beide bestimmt durch Gelchromatographie - nach der Gleichung bestimmt wird:

$$MWD = Mw/Mn.$$

**9.** Polymer nach einem der vorhergehenden Ansprüche, wobei das Polymer ölverstreckt ist, wobei gegebenenfalls das Gewichtsverhältnis von Polymer zu Strecköl 10:1 bis 1:2 beträgt.

**10.** Polymerzusammensetzung, umfassend mindestens 60 Gew.-%, bezogen auf das Gesamtgewicht der Zusammensetzung, das 100 % beträgt, vorzugsweise mindestens 95 Gew.-%, mindestens eines Polybutadienpolymers nach einem der vorhergehenden Ansprüche.

**11.** Kautschukmischung, umfassend mindestens 5 Gew.-% des Polymers nach einem der vorhergehenden Ansprüche 1 bis 9 und ferner mindestens einen Füllstoff oder mindestens ein Härtungsmittel, das in der Lage ist, das Polymer zu härten, oder eine Kombination von mindestens einem Füllstoff und mindestens einem Härtungsmittel.

**12.** Prozess zur Herstellung eines Polybutadienpolymers nach einem der vorhergehenden Ansprüche 1 bis 8, umfassend

(i) Herstellen eines Polybutadienpolymers durch eine Polymerisationsreaktion, vorzugsweise umfassend die Gegenwart mindestens eines Neodym enthaltenden Polymerisationskatalysators, wobei das Polymer mindestens eine der folgenden Eigenschaften aufweist

a) einen Verzweigungsgrad $\Delta\delta$ von 21 oder weniger;
b) eine Mooney-Viskosität ML 1+4 bei 100 °C von mindestens 25 und weniger als 90 Mooney-Einheiten;
c) eine Scherempfindlichkeit von weniger als 1,50 MU*g/kWs,

(ii) Behandeln der Reaktionsmischung mit mindestens einem Modifikator zur Erhöhung der Verzweigung und Verringerung des Werts von $\Delta\delta$ oder entweder zur Erhöhung der Mooney-Viskosität oder der Scherempfindlichkeit oder von beidem, wobei der Modifikator aus der Gruppe bestehend aus schwefelhaltigen Modifikatoren, polyschwefelhaltigen Modifikatoren oder einer Kombination davon ausgewählt ist, zur Bereitstellung eines Polymers nach einem der Ansprüche 1 bis 11 und gegebenenfalls
(iii) Isolieren des Polybutadienpolymers.

**13.** Prozess nach Anspruch 12, wobei das Modifikationsmittel aus der Gruppe bestehend aus schwefelhaltigen Modifikatoren und polyschwefelhaltigen Modifikatoren und Kombinationen davon ausgewählt ist und vorzugsweise aus einem oder mehreren Schwefelhalogenid(en) mit 1 bis 8 Schwefelatomen pro Molekül, vorzugsweise 1 oder 2 Schwefelatom(en) pro Molekül, ausgewählt ist und besonders bevorzugt aus $S_2Cl_2$, $SCl_2$, $SOCl_2$, $S_2Br_2$, $SOBr_2$ und Kombinationen davon ausgewählt ist.

**14.** Gegenstand, umfassend das Polybutadienpolymer nach einem der Ansprüche 1 bis 9 in gehärteter Form, wobei der Gegenstand vorzugsweise aus einem Golfball, einer Schuhsohle, einem Schlauch, einem Band, einem Reifen oder einer Reifenlauffläche oder einer anderen Komponente eines Reifens ausgewählt ist.

**15.** Verfahren zur Herstellung eines Gegenstands, umfassend das Aussetzen einer Zusammensetzung, die mindestens ein Polybutadienpolymer nach einem der Ansprüche 1 bis 9 und mindestens ein Härtungsmittel zum Härten des Polybutadienpolymers umfasst, einem Härten und Formen, wobei das Formen bei, vor oder nach dem Härten erfolgen kann.

## Revendications

**1.** Polymère de polybutadiène durcissable comprenant au moins 60 % en poids, de préférence au moins 80 % en poids de motifs dérivés du butadiène, sur la base du poids total du polymère, et dans lequel le polymère a une viscosité Mooney ML 1+4 à 100 °C de 42 à 150 UM, et une teneur en motifs cis d'au moins 96 % en poids et dans lequel le polymère a été traité par au moins un modificateur pour introduire une ramification ou un repliement des chaînes de polymère et dans lequel le modificateur est choisi dans le groupe constitué des modificateurs contenant du soufre, des modificateurs contenant un polysoufre ou une combinaison correspondante et dans lequel le polymère est ramifié et possède un degré de ramification $\Delta\delta$ de 20 ou moins et satisfait à l'équation :
Viscosité Mooney ML 1+4 à 100 °C du polymère / degré de ramification $\Delta\delta$ du polymère $\geq$ 4,6 et dans lequel tous les paramètres ont été déterminés par des procédés tels que décrits dans la partie procédé de la description.

**2.** Polymère selon la revendication 1, dans lequel le polymère de polybutadiène a soit une viscosité Mooney ML 1+4 à 100 °C de 63 à 150 unités Mooney, soit une viscosité Mooney ML 1+4 à 100 °C de 44 à 63 unités Mooney.

**3.** Polymère selon l'une quelconque des revendications précédentes, dans lequel le polymère de polybutadiène a été préparé par une réaction de polymérisation comprenant au moins un catalyseur de polymérisation comprenant du néodyme.

**4.** Polymère selon l'une quelconque des revendications précédentes, dans lequel le modificateur contenant du soufre comprend un halogénure de soufre ayant de 1 à 8 atomes de soufre par molécule.

**5.** Polymère selon l'une quelconque des revendications précédentes, dans lequel le modificateur contenant du soufre est choisi parmi $S_2Cl_2$, $SCl_2$, $SOCl_2$, $S_2Br_2$, $SOBr_2$ et une combinaison de ceux-ci.

**6.** Polymère selon l'une quelconque des revendications précédentes, dans lequel le polymère a une sensibilité au cisaillement supérieure à 1,50 UM*g/kWs, de préférence supérieure à 2,0 UM*g/kWs, telle que déterminée par le procédé décrit dans la section du procédé.

**7.** Polymère selon l'une quelconque des revendications précédentes, dans lequel le polymère a soit un degré de ramification $\Delta\delta$ de 19 ou moins, de préférence un $\Delta\delta$ de 5 à 19, soit a une valeur de 4,9 à 8,7 pour le quotient de viscosité Mooney ML 1+4 à 100 °C / degré de ramification $\Delta\delta$, ou les deux.

**8.** Polymère selon l'une quelconque des revendications précédentes, ayant une distribution de poids moléculaires (MWD) de 3,0 ou moins, de préférence de 2,0 inclus et jusqu'à 3,0 inclus, dans lequel la MWD est déterminée en divisant le poids moléculaire moyen en poids (Mw) par le poids moléculaire moyen moléculaire (Mn) - tous deux déterminés par chromatographie sur gel - selon l'équation :

$$MWD = Mw/Mn.$$

**9.** Polymère selon l'une quelconque des revendications précédentes, dans lequel le polymère est étendu à l'huile, dans lequel, éventuellement, le rapport pondéral du polymère sur l'huile d'extenseur est de 10:1 à 1:2.

**10.** Composition de polymère comprenant au moins 60 % en poids par rapport au poids total de la composition qui est de 100 %, de préférence au moins 95 % en poids d'au moins un polymère de polybutadiène tel que défini dans l'une quelconque des revendications précédentes.

**11.** Composition de caoutchouc comprenant au moins 5 % en poids du polymère selon l'une quelconque des revendications 1 à 9 précédentes et comprenant en outre au moins une charge ou au moins un agent de durcissement capable de durcir le polymère ou une combinaison d'au moins une charge et d'au moins un agent de durcissement.

**12.** Procédé de préparation d'un polymère de polybutadiène selon l'une quelconque des revendications 1 à 8 précédentes, comprenant

(i) la préparation d'un polymère de polybutadiène par une réaction de polymérisation, comprenant de préférence la présence d'au moins un catalyseur de polymérisation comprenant du néodyme, dans lequel le polymère possède au moins une des propriétés suivantes

a) un degré de ramification $\Delta\delta$ de 21 ou moins ;
b) une viscosité Mooney ML 1+4 à 100 °C d'au moins 25 et inférieure à 90 unités Mooney ;
c) une sensibilité au cisaillement inférieure à 1,50 UM*g/kWs,

(ii) le traitement du mélange réactionnel par au moins un modificateur pour augmenter la ramification et réduire la valeur de $\Delta\delta$ ou pour augmenter la viscosité Mooney ou la sensibilité au cisaillement, ou les deux, le modificateur étant choisi dans le groupe constitué des modificateurs contenant du soufre, des modificateurs contenant un polysoufre ou une combinaison correspondante, pour fournir un polymère tel que défini selon l'une quelconque des revendications 1 à 11 ; et, éventuellement,
(iii) l'isolement du polymère de polybutadiène.

**13.** Procédé selon la revendication 12, dans lequel l'agent de modification est choisi dans le groupe constitué des modificateurs contenant du soufre et des modificateurs contenant un polysoufre et leurs combinaisons, et, de préférence, est choisi parmi un ou plusieurs halogénures de soufre ayant de 1 à 8 atomes de soufre par molécule, de préférence 1 ou 2 atomes de soufre par molécule, et, plus préférablement, choisi parmi $S_2Cl_2$, $SCl_2$, $SOCl_2$, $S_2Br_2$, $SOBr_2$ et leurs combinaisons.

**14.** Article comprenant le polymère de polybutadiène selon l'une quelconque des revendications 1 à 9 sous une forme durcie, de préférence, l'article est choisi parmi une balle de golf, une semelle de chaussure, un tuyau, une ceinture, un pneu ou une bande de roulement de pneu ou un autre composant d'un pneu.

**15.** Procédé de fabrication d'un article comprenant la soumission d'une composition comprenant au moins un polymère de polybutadiène tel que défini dans l'une quelconque des revendications 1 à 9 et au moins un agent de durcissement pour le durcissement du polymère de polybutadiène pour un durcissement et un façonnage, dans lequel le façonnage peut avoir lieu pendant, avant ou après le durcissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20200123288 A
- US 20020107339 A1
- US 5567784 A
- US 20220010105 A1
- WO 201505055511 A1
- US 20160237259 A1
- CA 1143711 A
- US 4260707 A
- US 20130172489 A1
- US 2011112261 A1
- US 9845366 B
- US 9963519 B
- US 20160280815 A1
- EP 2819853 B1
- WO 2021009156 A1
- US 20160083495 A1
- US 20160075809 A1
- EP 2847264 A1
- US 6521698 B2